# EUROPÄISCHE PATENTSCHRIFT

(11) **EP 3 910 762 B1**
(45) Veröffentlichungstag und Bekanntmachung des Hinweises auf die Patenterteilung: **06.08.2025**
(21) Anmeldenummer: 21173438.9
(22) Anmeldetag: 11.05.2021
(51) Int. Cl.: H02K 5/132, H02K 7/18, H02K 9/19, H02K 1/27, H02K 5/20, H02K 9/22, H02K 21/16

(54) **WASSERTURBINE UND/ODER WASSERPUMPE**
WATER TURBINE AND/OR WATER PUMP
TURBINE À EAU ET/OU POMPE À EAU

(30) Priorität: 11.05.2020 DE 102020112740
(43) Veröffentlichungstag der Anmeldung: 17.11.2021
(73) Patentinhaber: DIVE Turbinen GmbH & Co. KG, 63916 Amorbach (DE)
(72) Erfinder: Fella, Günter, 63916 Amorbach (DE)
(74) Vertreter: Waller, Stefan

(56) Entgegenhaltungen:
- EP-A1- 2 950 429
- WO-A1-2018/046219
- DE-A1- 102014 117 962
- DE-A1- 102015 218 519
- JP-A- 2020 025 450

## Beschreibung

Die Erfindung betrifft eine Wasserturbine und/oder Wasserpumpe nach dem Oberbegriff des Anspruchs 1, mit einer elektrischen Maschine, die als Motor und/oder Generator betrieben werden kann.

Solche elektrischen Maschinen haben oft einen Rotor als Kurzschlussläufer oder mit Permanentmagneten, der in einem durch Feldwicklungen erzeugten magnetischen Feld gedreht wird. Die dabei entstehende Verlustleistung erwärmt den Rotor und kann durch einen Luftstrom nicht ausreichend abgeführt werden. Dies begrenzt oftmals die Leistung solcher Maschinen.

Im Stand Technik sind weiterhin vollständig unter Wasser angeordnete Turbinen und Wasserpumpen bekannt. Auch bei diesen ergibt sich das Problem der Abführung der Wärme des Rotors.

Bei der Ausbildung des Rotors ist es dabei oftmals ausreichend, diesen als Hohlzylinder auszuführen. Beispielsweise bei einer permanent erregten Maschine trägt ein solcher Hohlzylinder mehrere einzelne Permanentmagneten oder eine Schicht aus permanent magnetischem Material. Auch bei einer Kurzschlussläufermaschine kann der Rotor aus einem hohlen Käfigläufer bestehen oder kann aus einem Hohlzylinder aus gut leitendem Material wie Kupfer oder Aluminium gebildet sein.

Aus der DE 10 2006 043 946 A1 ist eine vollständig unter Wasser angeordnete Turbine bekannt, bei der in einem Gehäuse der Rotor wie auch die Statorwicklungen angeordnet und gegenüber dem Eindringen des umgebenden Wassers abgedichtet sind. Bei dieser Wasserturbine erfolgt die Kühlung durch das umspülende Wasser. Auch hier ist jedoch bei größeren Leistungen die Abführung der Verlustleistung oft nicht ausreichend gewährt.

Aus der WO 2018/046219 A1 ist eine Wasserturbine mit einem hohl ausgeführten Rotor bekannt, dessen Wicklungen mit Kühlkanälen für eine Primärkühlflüssigkeit ausgestattet sind.

Der vorliegenden Erfindung liegt daher die Aufgabe zugrunde, eine Wasserturbine und/oder Wasserpumpe zur Verfügung zu stellen, bei der die zuvor genannten Nachteile vermieden werden und die Kühlung des Rotors verbessert ist.

Diese Aufgabe wird durch eine Wasserturbine und/oder Wasserpumpe mit den Merkmalen des unabhängigen Patentanspruchs 1 gelöst. Vorteilhafte Weiterbildungen der Erfindung sind in den Unteransprüchen angegeben.

Die Aufgabe wird dadurch gelöst, indem bei der elektrischen Maschine, die als Generator und/oder Elektromotor betrieben werden kann, wobei ein Rotor innerhalb einer Wicklungsanordnung drehbar gelagert und hohl ausgeführt ist, innerhalb des Rotors ein feststehender Kühlkörper zur berührungslosen Abführung von Wärme angeordnet ist.

Vorteilhaft können dadurch bei kompakten Maßen große Leistung der elektrischen Maschine erreicht werden, da der Rotor in seinem Hohlraum, insbesondere ein zylindrischer Rotor oder Käfigläufer, über eine große Oberfläche für die Wärmeabfuhr verfügt und zugleich nur über eine kurze Distanz durch Strahlungswärme sowie Konvektion der Luft die Verlustwärme abgegeben werden kann. Da dies berührungslos geschieht, entstehen auch keine zusätzlichen Reibungsverluste. Es kann eine sehr viel größere Kühlleistung erreicht werden, als wenn nur über eine Welle und die Lagerung des Rotors die Wärme abgeführt werden kann.

Vorteilhaft ist der Rotor ein permanentmagneterregter Rotor.

Diese können besonders kompakt ausgeführt werden und gerade dadurch ist auf die limitierende Größe die Abführung der Abwärme.

In einer günstigen Ausführungsform ist der Kühlkörper doppelwandig ausgeführt und wird von einer Kühlflüssigkeit durchströmt.

Bei Wasserpumpen oder Wasserturbinen steht das Triebwasser zur Verfügung und kann, eventuell gefiltert, durch den Kühlkörper geleitet werden. Dabei kann der Kühlkörper in seinem Inneren Leitelemente für die Kühlflüssigkeit aufweisen insbesondere eine Spiralwendelstruktur. Es ist auch denkbar, hier als einen Kühlkörper ein Spiralrohr zu nutzen. Weiterhin ist ebenso denkbar, in dem Kühlkörper einem getrennten Kühlkreislauf vorzusehen der über einen Wärmetauscher mit dem Umgebungswasser bei einer Wasserturbine die Abwärme abführt. Bei Ausführung einer elektrischen Maschine an Land kann die Kühlflüssigkeit in bekannte Art und Weise über einen Wärmetauscher die Abwärme an die Umgebungsluft abgeben.

Die Wasserturbine und/oder Wasserpumpe kann unter einem Winkel gegenüber der Horizontalen, insbesondere senkrecht, angeordnet sein.

In einer vorteilhaften Ausgestaltung ist ein Gehäuse der Wasserturbine und/oder Wasserpumpe gasdicht und die Welle der Läufereinheit nach unten aus dem Gehäuse durch eine Wellenöffnung herausgeführt, so dass ein Eindringen des Wassers in das Gehäuse durch ein in dem Gehäuse komprimiertes Gasvolumen verhindert wird

Die beschriebene Kühlung der Abwärme des Rotors ist besonders vorteilhaft bei Unterwasserturbinen. Bei diesen kann die Abwärme letztlich an das umspülende Triebwasser abgegeben werden und eine hohe Leistungsdichte erreicht werden, ohne dass es innerhalb des Gehäuses zu Wärmeproblemen kommt. Vorteilhaft steht durch den Kühlkörper eine viel größere Abwärme-Abführkapazität zur Verfügung, als allein über die Welle zur Turbine sowie zur Lagerung des Rotors.

Weitere Vorteile und Einzelheiten der Erfindung werden anhand des in den schematischen Figuren dargestellten Ausführungsbeispiels näher erläutert. Hierbei zeigt
- Fig. 1: in einem schematischen Schnitt ein Gesamtbild einer Wasserturbine und
- Fig. 2: einen Teilabschnitt mit einer elektrischen Maschine der Fig. 1.

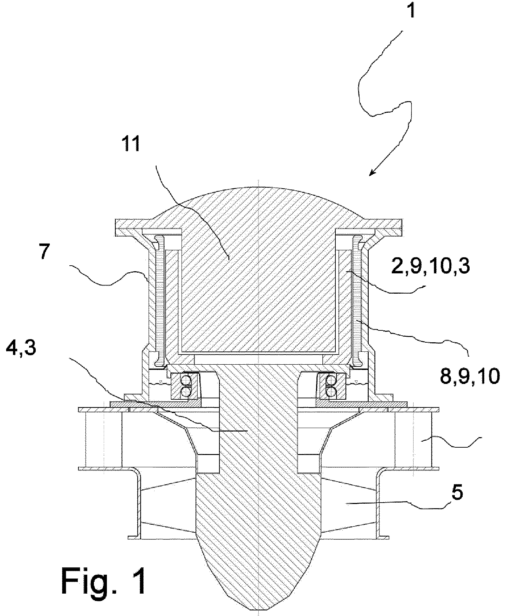

Die Fig. 1 zeigt in einem schematischen Schnitt ein Gesamtbild einer Wasserturbine 1 mit einem als Hohlzylinder ausgeführten Rotor 2, der in einer Läufereinheit 3 über eine Welle 4 mit einer Turbine 5 verbunden ist. Die Turbine 5 wird über Leitschaufeln 6 mit Triebwasser beaufschlagt, das nach unten, beispielsweise über ein hier nicht dargestelltes Saugrohr, abgeführt wird.

Die Wasserturbine 1 weist ein gasdichtes Gehäuse 7 auf, das nach unten offen ist, sodass durch komprimierte Luft bzw. Gas der Eintritt von Wasser verhindert wird, auch falls die Wasserturbine 1 vollständig unter Wasser angeordnet ist.

Der Rotor 2 ist von Statorwicklungen 8 umgeben und bildet mit diesem zusammen eine elektrische Maschine 9, in dem vorliegenden Beispiel als Generator 10. Es ist jedoch auch möglich eine solche Wasserturbine 1 als Pumpe zu betreiben, bei der elektrischen Maschine 9 als Antriebsmotor dient.

In dem Hohlraum des Rotors 2 ist ein Kühlkörper 11 eingesetzt, der mit kleinem Spaltabstand über Strahlungswärme wie auch Konvektion der in dem Gehäuse 7 enthaltenen Luft die Abwärme des Rotors 2 aufnimmt und abführt.

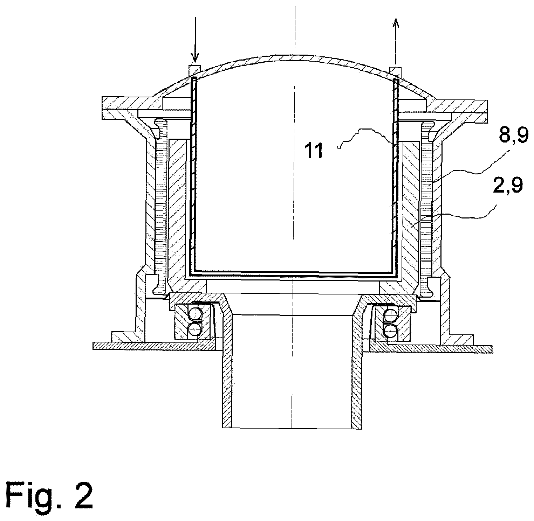

Die Fig. 2 zeigt einen Teilabschnitt mit der elektrische Maschine 9 der Fig. 1. Der innerhalb der Statorwicklungen 8 angeordnete Rotor 2 ist als Hohlzylinder ausgeführt. In dem Hohlraum des Rotors 2 ist der Kühlkörper 11 angeordnet, der doppelwandig ausgeführt ist und durch dessen Inneres eine Kühlflüssigkeit geleitet wird, wie durch die Pfeile angedeutet, um die Abwärme abzuführen und beispielsweise einem Rückkühler zuzuführen.

## Patentansprüche

1. Wasserturbine und/oder Wasserpumpe mit einer elektrischen Maschine, die als Generator (10) und/oder Elektromotor betrieben werden kann, wobei ein Rotor (2) innerhalb einer Wicklungsanordnung (8) drehbar gelagert ist, mit einem Kühlkörper (11) zur Abführung von Wärme, wobei
der Rotor (2) über eine Welle (4) mit einer Turbine (5) verbunden ist und eine Läufereinheit (3) der Wasserturbine (1) und/oder Wasserpumpe bildet,
wobei der Rotor (2) hohl ausgeführt ist,
**dadurch gekennzeichnet,**
**dass** der Kühlkörper (11) feststehend ist und innerhalb des Rotors (2) zur berührungslosen Abführung von Wärme angeordnet ist.

2. Wasserturbine und/oder Wasserpumpe nach Anspruch 1,
**dadurch gekennzeichnet,**
**dass** der Rotor (2) ein permanentmagneterregter Rotor ist.

3. Wasserturbine und/oder Wasserpumpe nach Anspruch 1 oder 2,
**dadurch gekennzeichnet,**
**dass** der Kühlkörper (11) doppelwandig ausgeführt ist und von einer Kühlflüssigkeit durchströmt wird.

4. Wasserturbine und/oder Wasserpumpe nach einem der vorhergehenden Ansprüche,
**dadurch gekennzeichnet,**
**dass** die Wasserturbine (1) und/oder Wasserpumpe unter einem Winkel gegenüber der Horizontalen, insbesondere senkrecht, angeordnet ist.

5. Wasserturbine und/oder Wasserpumpe nach Anspruch 4,
**dadurch gekennzeichnet,**
**dass** ein Gehäuse (7) der Wasserturbine (5) und/oder Wasserpumpe gasdicht ist und die Welle (4) der Läufereinheit (3) nach unten aus dem Gehäuse (7) durch eine Wellenöffnung herausgeführt ist, so dass ein Eindringen des Wassers in das Gehäuse (7) durch ein in dem Gehäuse komprimiertes Gasvolumen verhindert wird.

6. Wasserturbine und/oder Wasserpumpe nach Anspruch 5,
**dadurch gekennzeichnet,**
**dass** die Wasserturbine (1) und/oder Wasserpumpe unter Wasser angeordnet ist.

## Claims

1. Water turbine and/or water pump comprising an electric machine, which can be operated as a generator (10) and/or an electric motor, wherein a rotor (2) is rotatably mounted within a winding arrangement (8), comprising a cooling body (11) for dissipating heat, wherein
the rotor (2) is connected to a turbine (5) via a shaft (4) and forms a rotor unit (3) of the water turbine (1) and/or water pump, wherein
the rotor (2) is hollow,
**characterized**
**in that** the cooling body (11) is stationary and is located within the rotor (2) for contactless dissipation of heat.

2. Water turbine and/or water pump according to Claim 1,
**characterized**
**in that** the rotor (2) is a permanent-magnet rotor.

3. Water turbine and/or water pump according to Claim 1 or 2,
**characterized**
**in that** the cooling body (11) is double-walled and has a cooling liquid flowing through it.

4. Water turbine and/or water pump according to one of the preceding claims,
**characterized**
**in that** the water turbine (1) and/or water pump is arranged at an angle with respect to the horizontal, in particular vertically.

5. Water turbine and/or water pump according to Claim 4,
**characterized**
**in that** a housing (7) of the water turbine (5) and/or water pump is gas-tight and the shaft (4) of the rotor unit (3) is routed downwards out of the housing (7) through a shaft opening, so that water is prevented from entering the housing (7) by a gas volume compressed in the housing.

6. Water turbine and/or water pump according to Claim 5,
**characterized**
**in that** the water turbine (1) and/or water pump is located under water.

## Revendications

1. Turbine hydraulique et/ou pompe hydraulique comprenant une machine électrique apte à fonctionner en tant que générateur (10) et/ou moteur électrique, dans laquelle un rotor (2) est monté rotatif à l'intérieur d'un ensemble d'enroulements (8), avec un corps de refroidissement (11) pour évacuer la chaleur,
le rotor (2) étant relié par un arbre (4) à une turbine (5) et formant une unité rotor (3) de la turbine hydraulique (1) et/ou de la pompe hydraulique,
le rotor (2) étant réalisé de manière creuse,
**caractérisée**
**en ce que** le corps de refroidissement (11) est fixe et est agencé à l'intérieur du rotor (2) de manière à évacuer la chaleur sans contact.

2. Turbine hydraulique et/ou pompe hydraulique selon la revendication 1,
**caractérisée**
**en ce que** le rotor (2) est un rotor à aimant permanent.

3. Turbine hydraulique et/ou pompe hydraulique selon la revendication 1 ou la revendication 2,
**caractérisée**
**en ce que** le corps de refroidissement (11) est à double paroi et est traversé par un liquide de refroidissement.

4. Turbine hydraulique et/ou pompe hydraulique selon l'une des revendications précédentes,
**caractérisée**
**en ce que** la turbine hydraulique (1) et/ou la pompe hydraulique est agencée selon un angle par rapport à l'horizontale, en particulier perpendiculairement.

5. Turbine hydraulique et/ou pompe hydraulique selon la revendication 4,
**caractérisée**
**en ce qu'**un boîtier (7) de la turbine hydraulique (5) et/ou de la pompe hydraulique est étanche aux gaz et en ce que l'arbre (4) de l'unité rotor (3) est guidé vers le bas hors du boîtier (7) à travers une ouverture d'arbre, de sorte que la pénétration d'eau dans le boîtier (7) soit empêchée par un volume de gaz comprimé dans le boîtier.

6. Turbine hydraulique et/ou pompe hydraulique selon la revendication 5,
**caractérisée**
**en ce que** la turbine hydraulique (1) et/ou la pompe hydraulique est agencée sous l'eau.
